# EUROPEAN PATENT SPECIFICATION

(11) **EP 2 818 776 B1**
(45) Date of publication and mention of the grant of the patent: **03.08.2016**
(21) Application number: 14172258.7
(22) Date of filing: 13.06.2014
(51) Int. Cl.: F16K 11/22

(54) **Bypass valve**
Bypassventil
SOUPAPE DE DERIVATION

(30) Priority: 24.06.2013 IT MI20131047
(43) Date of publication of application: 31.12.2014
(73) Proprietor: Vir Valvoindustria Ing. Rizzio - S.P.A., 13018 Valduggia (VC) (IT)
(72) Inventor: Braga, Marco, 13011 Borgosesia (Vercelli) (IT)
(74) Representative: Petruzziello, Aldo

(56) References cited:
- DE-U1-202009 001 923
- US-A1- 2012 291 901

## Description

The object of the present invention is a bypass valve.

More particularly the present invention relates to an improved bypass valve, especially suitable for the connection of terminal units in which a heat exchange occurs between the environment to be conditioned and a thermal-carrier fluid, in particular a liquid, with the lines of delivery or supply and return of said fluid, with these units typically defined by heat exchangers, fan coil units, batteries for air handling units of the AHU (air handling unit) type in the field of HVAC (heating, ventilation and air conditioning), etc.

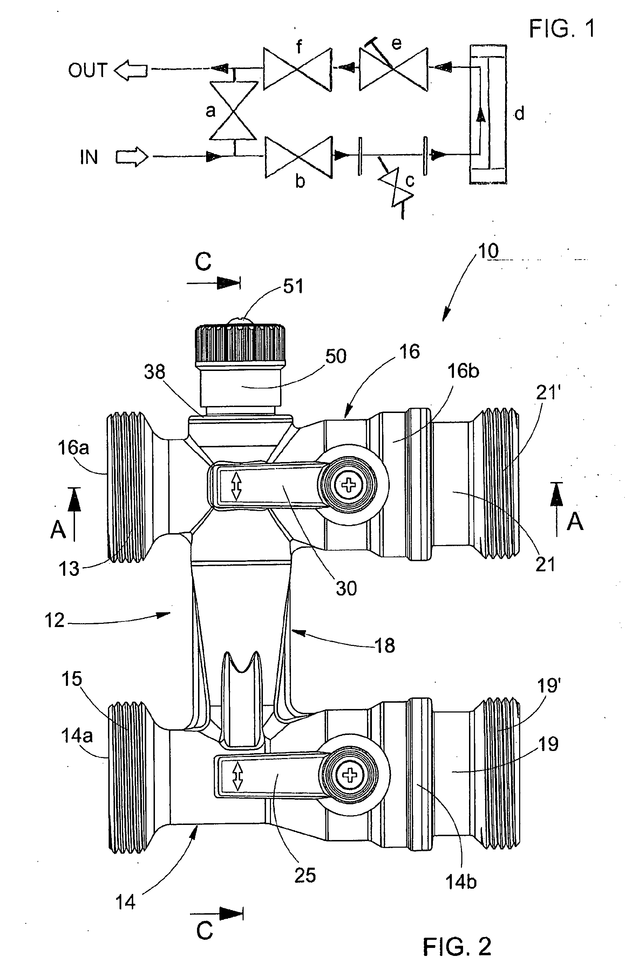

As is known, the terminal units of heat exchange in an HVAC environment are typically connected as schematised in Figure 1, in which a terminal unit "d" is connected to the delivery lines "IN" and return lines "OUT" to define a circuit provided, with reference to the direction of flow of the fluid (indicated by the arrows in Figure 1), upstream and downstream of the terminal unit "d", with a series of valves and components suitable for the regulation, management and circulation of the fluid:
- a valve "b" with on-off function for the delivery channel "IN";
- a valve "f" with on-off function for the return channel "OUT";
- an optional valve "e" of manual balancing/regulation or motorised, placed upstream of the valve "f";
- an optional filter "c" with drainage, placed downstream of the valve "b";
- a valve "a" with on-off function for the bypass channel, placed between upstream of the valve "b" and downstream of the valve "f".

In such a typical circuit configuration, the valves "b" and "f" have always the same function and are always necessary for the purpose of allowing, following a closure thereof, the disconnection of the terminal unit "d" with respect to the supply/return line in order to be able to perform operations of maintenance, installation, disinstallation and the like and co-operate with the bypass valve "a", which by closing/opening allows the supply/cut-off of the thermal-carrier fluid to the optional terminal units, valves and components placed in series to the valves "b" or "f" as a function of the specific needs.

For example an operative configuration is possible wherein the valve "a" is closed and the fluid, taking account of the fact that the on-off valves are open, goes to supply the terminal unit "d" (case of standard operations) or a configuration wherein the valve "a" is open with the on-off valves "b" and "f" closed (case of maintenance/assembly/disassembly/replacement of components, without interruption of the flow of the thermal-carrier fluid and, consequently, the supply of the subsequent units) or again a configuration wherein the bypass valve "a" and the on-off valve "f" are closed and the on-off valve "b" open so as to allow the flowing of the fluid through the terminal unit "d" for the emptying of the same and via the filter "c" for the scrubbing of said latter or, further, the bypass valve "a" and the on-off valve "b" are closed and the fluid traverses the on-off valve "f" and the terminal unit "d" to then pass through the filter "c" in order to scrub the terminal unit and eliminate possible impurities introduced.

Taking account of the fact that in the circuits for handling the terminal units the on-off delivery, return and bypass valves are always present, installers are obliged, for each of the terminal units present in the circuit (at times also multiple), to replicate many times the assembly of the aforesaid valves one with the other and with the two delivery and return lines and need, as well as the three valves (typically of the ball, shutter or globe type), two T-shaped unions and further eight connections (threaded or welded or with pressing) for the internal connection and to the delivery and return lines.

What is stated above configures an important disadvantage linked to the high number of components necessary, to the definition of the circuit, to the time used for the formation of the same and to the consequent and correlated costs (production, labour, etc.).

In order to resolve this disadvantage types of valves have been developed with an H-shaped configuration in which the bypass channel is connected, as rigidly as possible, to the delivery and to the return channels.

However, these known and improved types of valves also have some major disadvantages linked to the problems of seal and to the cost of production.

For example, models of H-shaped valves are present on the market with bypass channels which have threaded joints situated in any point between the delivery channel and the return one in order to allow changes to the gauge (i.e. the distance between the delivery line and the return one) or to allow the housing in this channel of an on-off bypass valve with spherical shutter or in any case of the rotating type.

However the assembly of such a type of valve, on the one hand, to the delivery and return lines with fixed gauge and, on the other hand, to the two corresponding inlets on the terminal unit with gauge likewise fixed, determines the generation of stresses of traction, flexure and torsion on the bypass arm, i.e. of mechanical stresses which can damage the joints and, consequently, cause losses of thermal-carrier fluid in the bypass channel in the direction of the external environment.

Further constructional solutions with an H-shaped configuration do not integrate the on-off delivery and/or return valves which are mounted separately, solving in this way, only partially, the problems linked to the costs and to the times of manufacture/installation, continuing to entail additional costs linked to the need to have to connect the two delivery and return sections with the two on-off delivery and return valves.

This solution also has further major disadvantages linked to the presence of the joints formed by the installer which, stressed by the manoeuvres of assembly, can give rise to leaks outwards.

According to a further constructional solution, the H-shaped valve has a monobloc bypass channel inside whereof an on-off valve is housed with spherical shutter or another traditional type.

For example document US2012/291901 describes an H-shaped valve comprising an inlet duct, an outlet duct and a bypass duct, each one internally and respectively provided with an inlet valve, with an outlet valve and with a bypass valve and, moreover, said H-shaped valve comprises an actuator device by means of which it is possible to control the simultaneous opening/closing of the three valves, so as to change from an operative condition to a bypass condition necessary for work of maintenance, repair and the like of the apparatus whereto this H-shaped valve is connected.

However this solution also has some major disadvantages linked to the fact that it has the main purpose of limiting the release of liquid at the act of disconnection of the cooling circuit of an electronic unit in the case of maintenance work to avoid possible short circuits, with this limitation of the release of liquid performed by actuating simultaneously the valves (delivery, return and bypass). However it does not allow an independent combination of the states of opening/closing of the single valves useful for performing different functions such as, for example, the standard supply of a terminal unit, the exclusion of a terminal unit without the interruption of the supply for the units placed in series to said excluded unit, direct and reverse scrubbing, etc.

A further disadvantage is linked to the strong stresses on the bypass channel which can alter the geometry of the seat of the pin of manoeuvre of the shutter with consequent possible leaks outwards of the thermal-carrier liquid.

This aforesaid disadvantage can be resolved by using a different type of valve provided with a monobloc bypass channel without bypass valve and two valves with rotating shutter with three ways housed in two T-shaped intersections between the bypass delivery/channel and bypass return/channel sections.

However this solution, even if effective as regards the aspect linked to the leaks outwards of the thermal-carrier fluid, is also characterised by a high cost and by the poor operative clarity and practicality of use.
Another type of bypass valve, as well as the disadvantages of the configurations described above, requires complex and costly machining operations off-plane of the pipes of the seat of the pin for the housing of the ball type shutter of the bypass section.

The object of the present invention is that of obviating the disadvantages stated above.

More particularly the object of the present invention is that of providing an improved bypass valve with an H-shaped configuration and monobloc structure suitable for allowing the maintaining of the monobloc layout structure with the integration of the two delivery and return valves also in the case of a reduced gauge (40 mm) typical of small terminal units.

A further object of the present invention is that of providing a bypass valve suitable for lowering the risk of leaks outwards of the thermal-carrier fluid.

A further object of the present invention is that of providing a bypass valve with monobloc structure which does not require long and costly machining cycles such as, for example, machining operations off-plane of the pipes.

A further object of the present invention is that of providing a bypass valve which is of high operational and use clarity.

A further object of the present invention is to make available to users an improved bypass valve suitable for ensuring a high level of resistance and reliability.

These and other objects are achieved by the invention which has the features as claimed in claim 1.

According to the invention an improved bypass valve is provided, comprising an H-shaped valve-body with two opposed and parallel tubular elements defining a delivery duct and a return duct joined one to the other and communicating by means of a transverse element defining a bypass duct, integrating, in a monobloc structure, an on-off delivery valve, an on-off return valve and an on-off bypass valve with said latter provided with a linear shutter to enable/disable the circulation of a thermal-carrier fluid through said bypass duct.

Advantageous embodiments of the invention are disclosed by the dependent claims. The constructional and functional features of the improved bypass valve of the present invention will be made clearer by the following detailed description, in which reference is made to the accompanying drawings which represent a preferred and non-limiting embodiment thereof and in which:
Figure 1 represents a hydraulic circuit diagram depicting the connection of a traditional bypass valve with respect to a terminal unit;
Figure 2 represents schematically a front view of the bypass valve of the invention;
Figure 3 represents schematically a view from above of the bypass valve of Figure 2;
Figure 4 represents schematically a view from below of the valve of the invention of Figure 2;
Figure 5 represents at schematic level a section view of the valve of the invention along a plane A-A as per Figure 2;
Figure 6 represents at schematic level a section view of the valve of the invention along a plane B-B as per Figure 3;
Figure 7 represents at schematic level a section view of the valve of the invention along a plane C-C as per Figure 2;
Figure 8 represents, schematically, a blown-up axonometric view of the bypass valve of the invention.

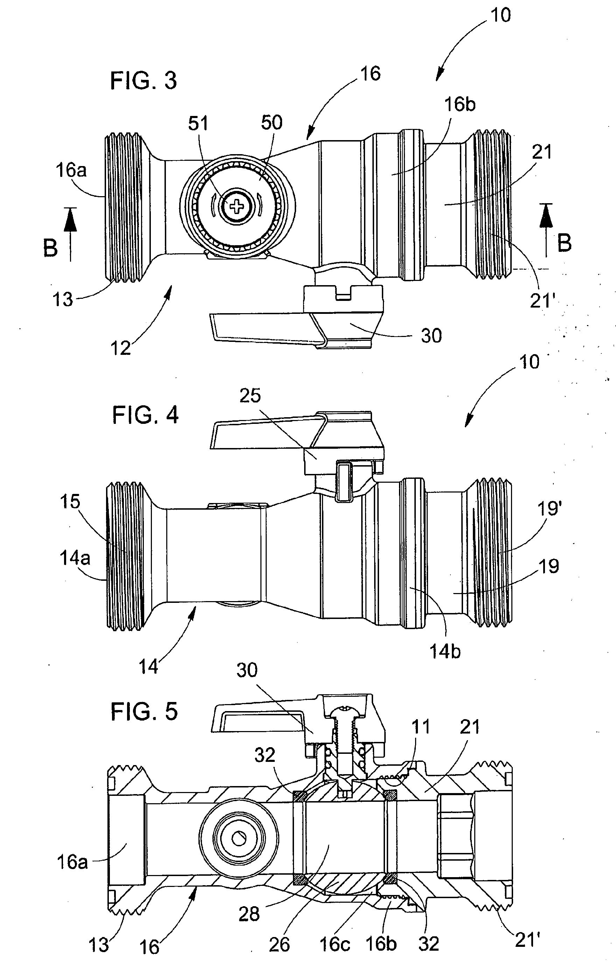

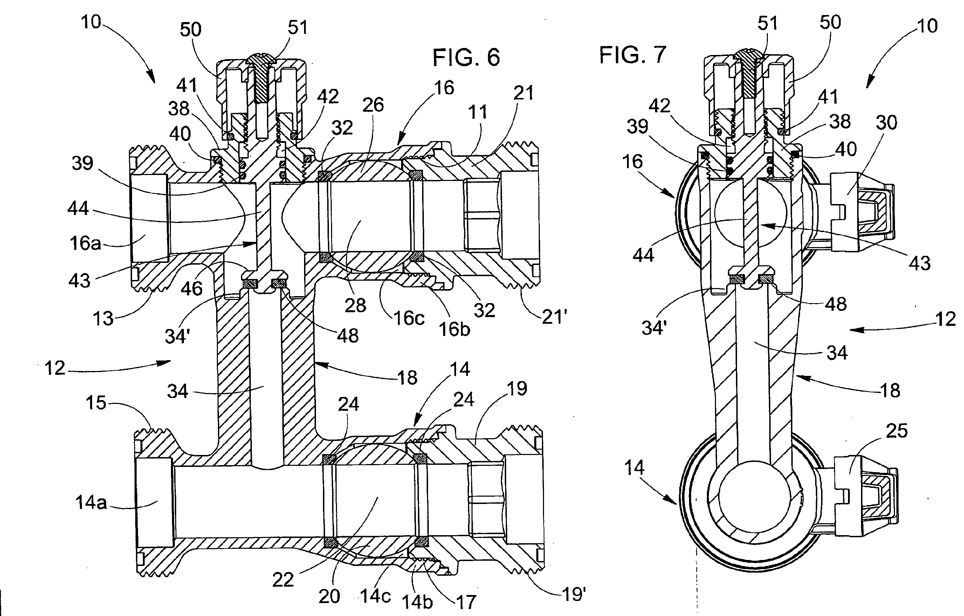

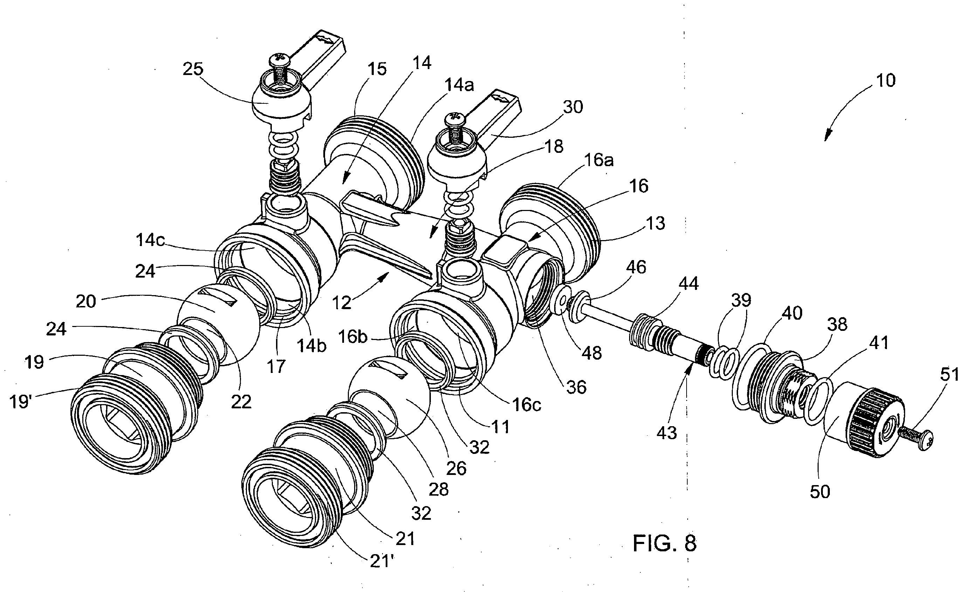

Referring to the aforesaid drawings, the bypass valve of the invention, denoted overall by 10 in Figures 2 to 8, comprises a valve-body 12 made typically in brass, bronze, steel or in another material traditionally suitable for the purpose with a process of hot moulding or melting or the like, shaped like an H with two opposite and parallel tubular elements defining, respectively, a delivery duct 14 and a return duct 16 joined one to the other and communicating by means of a transverse element defining a bypass duct 18.

The delivery duct 14 has an inlet 14a and an outlet 14b, opposite one to the other, with the inlet 14a provided with a threaded external profile or crown 15 for a connection with a delivery pipe (not shown in the drawings) and the outlet 14b provided with a threaded internal profile or crown 17 for the connection with a sleeve 19 whose end, opposite that of connection with respect to the outlet 14b, is suitable for being connected to an inlet duct, for example, of a terminal unit (not shown) typically by means of a threaded connection 19'.

Likewise the return duct 16 has an outlet 16a and an inlet 16b, opposite one to the other, with the outlet 16a provided with a threaded external profile or crown 13 for a connection with a return pipe (not shown in the drawings) and the inlet 16b provided with a threaded internal profile or crown 11 for the connection with a sleeve 21 (totally similar to the sleeve 19) whose end, opposite that of connection with respect to the inlet 16b, is suitable for being connected to an outlet duct, for example, of a terminal unit (not shown) typically by means of a threaded connection 21'.

Inside a seat 14c of the delivery duct 14 a ball type shutter 20 is placed, provided with a channel 22 for the passage of the thermal-carrier fluid and actuated in rotation (to enable/disable the passage of the fluid) by means of a lever 25.
The seal of said shutter with respect to the delivery duct 14 and to the sleeve 19 is guaranteed by at least one pair of opposite sealing rings 24.

Moreover said one at least pair of opposite sealing rings 24, together with the sleeve 19, allow the ball type shutter 20 to be kept in the seat.

The assembly described in this way, placed inside the delivery duct, defines an on-off delivery valve.

A similar ball type shutter 26, provided with a channel 28, is placed inside a seat 16c of the return duct 16 and is rotatably actuated by means of a lever 30 to enable/disable the flow of the thermal-carrier fluid in the direction of the return pipe.
The seal of said shutter with respect to the return duct 16 and to the sleeve 21 is guaranteed by at least one pair of opposite sealing rings 32.

Moreover said one at least pair of opposite sealing rings, together with the sleeve 21, allow the ball type shutter 26 to be kept in the seat.

The assembly described in this way, placed inside the return duct, defines an on-off return valve.

In accordance with alternative embodiments the shutter suitable for enabling/disabling the passage of the thermal-carrier fluid can be of the conical male, gate, butterfly type or of another known typology/configuration suitable for the purpose.

The bypass duct 18 has an internal channel 34 or bypass channel suitable for allowing the passage of the thermal-carrier fluid along a bypass path when the terminal heat exchange unit is to be shut off from the supply with the thermal-carrier fluid, while continuing to supply the successive terminal units of the system placed in series with respect to the shut-off unit. Said internal channel places in communication one with the other the delivery duct 14 and the return duct 16.

The return duct 16 has an opening 36, formed coaxially to the internal channel 34 of the bypass duct 18 and on the opposite side with respect to that of connection of the same with respect to the return duct and closed by means of a cap 38, firmly secured with respect to said opening 36 by means of a threaded connection or another known type of removable connection and provided with one or more seal gaskets 40.

The cap 38 has a central through hole 42 coaxial to the internal channel 34 and suitable for inserting a linear shutter 43 according to the methods described below.

The linear shutter 43 comprises a rod 44 with one end, turned in the direction of the internal channel 34 of the bypass duct 18, provided with a shutter 46 comprising, optionally, at least one gasket 48 for forming the seal with respect to a seat 34' of the internal channel 34 of the bypass duct 18 for the function detailed here below and an opposite end, projecting with respect to the cap 38, whereon a knob 50 is fitted (attached to the rod 44 with a screw 51 or with another suitable retaining means) for the movement of said rod 44.

In an alternative embodiment the at least one gasket 48 is secured to the seat 34' of the internal channel 34 of the bypass duct 18.

The seal between the road 44 and the cap 38 is secured by gaskets 39 (typically 0-rings) fitted on the rod.

The assembly described above and defined by the linear shutter 43 actuated by means of the knob 50 constitutes an on-off valve of the bypass duct.

Externally and coaxially to the cap 38 a ring 41 is placed (typically an O-ring, preferably coloured) suitable for indicating visually the opening/closing of the bypass duct. In fact, in position of complete closure of the on-off bypass valve, said ring is hidden by the knob 50 and is therefore not visible.

The indication of the opening/closing of the bypass valve, as an alternative to the use of the coloured ring 41, can be performed by means of a graduated scale formed on the knob 50 or integral with the valve-body 12 or in another known way.

According to alternative embodiments, moreover, the linear shutter 43 can be of the type with fixed rod with translation of an internal portion of the shutter or can have a rod with different geometries suitable for reducing the possible load losses.

Moreover, according to further alternative embodiments, the on-off valve of the bypass duct which, with reference to the preferred embodiment, is placed in the return duct, can be placed in the delivery duct.

An operator/user, by acting on the levers 25 and 30 of the on-off delivery and return valves and on the knob 50 of the on-off bypass valve, enables/disables the passage of the thermal-carrier fluid through the bypass duct and through the delivery and return ducts, so as to perform possible operations of maintenance or exclude any elements of the circuit as described above with reference to Figure 1.

As can be seen from the above the advantages that the bypass valve of the invention achieves are clear.

The improved bypass valve of the present invention, being provided with a linear shutter element suitable for performing the on-off function for enabling/disabling the flowing of the thermal-carrier fluid through the bypass duct, allows advantageously elimination of the many disadvantages linked to the use of a ball type shutter. This is in that the use of a linear shutter does not require the presence of auxiliary seal elements to be inserted in the bypass duct in order to maintain the shutter housed inside its seat.
A further advantage is represented by the fact that the use of a shutter of the linear type does not require "off-plane" machining operations of the H-shaped valve-body, considerably reducing, in this way, the machining cycles, the correlated times and, consequently, the costs of machining and production. This is in that the reduced number of components which characterise the linear shutter allows the seat to be formed for the same during the operation of drilling of the internal channel of the bypass duct.

A further advantage is represented by the fact that the bypass valve of the invention integrates three on-off valves in a single monobloc structure, without the need for accessory connections.

Further advantageous is the fact that the improved bypass valve of the invention is provided with a linear axial shutter, does not require a sufficiently long bypass duct in order to accommodate a valve with spherical shutter and, therefore, it is possible to maintain a monobloc structure with the two delivery and return valves also in the case of a typical reduced gauge, for example, of the small terminal units.

Further advantageous is the fact that the on-off bypass valve assembly, thanks to the threaded connection of the cap 38 with respect to the valve-body 12, can easily be removed in order to eliminate possible bulky detritus which can accumulate at the shutter or for the replacement of gaskets or for other different works of maintenance/replacement.

A further advantage is represented by the fact that the bypass valve as described above allows a greater facility of use and a considerable lowering of possible errors which can influence the correct functioning of the system whereto said valve is connected. In fact the element of manoeuvre of the bypass valve, being placed laterally with respect to the levers of actuation of the on-off delivery and return valves, allows the reduction in the errors during the operations of manoeuvre of the valve reducing, at the same time, the risk of leaving the bypass channel open also during the standard functioning phase.

Although the invention has been described above with particular reference to one of its embodiments given solely by way of a non-limiting example, numerous changes and variations will appear clear to a person skilled in the art in light of the description given above. The present invention intends, therefore, to embrace all the modifications and the variations that fall within the scope of the following claims.

## Claims

1. An improved bypass valve (10), especially suitable for the connection of terminal units in which a heat exchange occurs between the environment to be conditioned and a thermal-carrier fluid, in particular a liquid, with the lines of delivery or supply and return of said fluid, with these units typically defined by heat exchangers, fan coil units, batteries for air handling units of the AHU (air handling unit) type in the field of HVAC (heating, ventilation and air conditioning), comprising an H-shaped valve-body (12) with two opposed and parallel tubular elements defining a delivery duct (14) and a return duct (16) joined one to the other and communicating by means of a transverse element defining a bypass duct (18), integrating, in a monobloc structure, an on-off delivery valve, an on-off return valve and an on-off bypass valve, with said latter comprising at least functional means of manoeuvre and of seal towards the external environment placed in the return duct (16) or in the delivery duct (14) and **characterised in that** it is provided with a linear shutter (43) of the on-off bypass valve which is suitable for coming into contact with a seat (34') of an internal channel (34) of the bypass duct (18) to enable/disable the circulation of the thermal-carrier fluid through said bypass duct (18), said valves being with independent actuation one in relation to the others for an independent combination of the states of opening/closure.

2. The valve according to claim 1, **characterised in that** the linear shutter (43) of the on-off bypass valve comprises a rod (44) provided at one end with a shutter (46) suitable for coming into contact with said seat (34') of the internal channel (34) of the bypass duct (18) to open/close the passage of fluid in the bypass duct itself and with the functional means of manoeuvre comprising a knob (50) fitted and fixed on the rod (44) at the opposite end to that comprising the shutter (46) and suitable for moving said shutter (46) in an axial direction.

3. The valve according to claim 1 or 2, **characterised in that** the on-off bypass valve is housed in a seat inside the return duct (16).

4. The valve according to claim 1 or 2, **characterised in that** the on-off bypass valve is housed in a seat inside the delivery duct (14).

5. The valve according to one or more of the previous claims, **characterised in that** the on-off bypass valve is secured in its seat by means of functional means of seal towards the external environment comprising a cap (38) provided with one or more seal gaskets (40) and with a central through hole (42) coaxial with the internal channel (34) and suitable for housing the rod (44) of the linear shutter (43), with said shutter provided with gaskets (39) suitable for ensuring a seal with respect to the cap (38) and with optional gaskets (48) for forming the seal with respect to the seat (34') of the internal channel (34) of the bypass duct (18).

6. The valve according to claim 5, **characterised in that** it comprises an indicator element of the opening/closing of the bypass duct (18) defined by a coloured ring (41), placed externally and coaxially to the cap (38) and hidden by the knob (50) in the fully closed configuration of said bypass duct.

7. The valve according to claim 6, **characterised in that** the indicator element of the opening/closing of the bypass duct (18) is defined by a graduated scale placed on the knob (50).

8. The valve according to claim 6, **characterised in that** the indicator element of the opening/closing of the bypass duct (18) is defined by a graduated scale integral to the valve-body (12).

9. The valve according to claim 6, **characterised in that** the connection of the on-off bypass valve with respect to the valve-body (12) is of the removable type with the cap (38) connected to said valve-body by means of a threading.

10. The valve according to any one of the preceding claims, **characterised in that** the on-off delivery valve comprises a ball type shutter (20) housed in a seat (14c) of the delivery duct (14) and actuated in rotation by means of a lever (25) and that the on-off return valve comprises a ball type shutter (26) housed in a seat (16c) of the return duct (16) and actuated in rotation by means of a lever (30), each of said ball type shutters (20, 26) being provided with seal elements defined by at least one pair of opposed sealing rings (24, 32) and maintained in the seats (14c, 16c), respectively, by means of a sleeve (19) connected to an outlet (14b) of the delivery duct (14) and a sleeve (21) connected to an inlet (16b) of the return duct (16).

## Patentansprüche

1. Verbessertes Bypassventil (10), das insbesondere für die Verbindung von Anschlusseinheiten, bei denen ein Wärmetauscher zwischen der Umgebung, die klimatisert werden soll, und einem Wärmeträgerfluid, insbesondere einer Flüssigkeit, auftritt, mit den Leitungen der Abgabe oder Zuführung und des Rücklaufs des Fluids geeignet ist, wobei diese Einheiten typischerweise durch Wärmetauscher, Gebläsekonvektoren, Batterien von Luftbehandlungseinheiten des Typs AHU (air handling unit) auf dem Gebiet des HVAC (heating, ventilation and air conditioning = Heizen, Be-/Entlüften (Ventilation) und Luftklimatisierung) definiert sind, und das einen H-förmigen Ventilkörper (12) mit zwei gegenüberliegenden und parallelen rohrförmigen Elementen, die eine Zuführungsleitung (14) und eine Rückführungsleitung (16) definieren, die miteinander verbunden sind und die mittels eines Querelements, das durch eine Bypassleitug (18) definiert ist und das sich in eine Monoblockstruktur integriert, miteinander kommunizieren, ein Ein-/Ausschalt-Zuflussventil, ein Ein-/Ausschalt-Rückschlagventil und ein Ein-/Ausschalt-Bypassventil umfasst, wobei letzteres mindestens funktionale Mittel zur Manipulation und zur Abdichtung nach außen in Richtung der äußeren Umgebung, die in der Rückführungsleitung (16) oder in der Zuführungsleitung (14) angeordnet sind, umfasst, und **dadurch gekennzeichnet ist, dass** es mit einem geradlinigen Verschlusselement (43) des Ein-/Ausschalt-Bypassventils versehen ist, das geeignet ist, mit einem Sitz (34') eines inneren Kanals (34) der Bypassleitug (18) in Kontakt zu kommen, um die Zirkulation des Wärmeträgerfluids durch die Bypassleitug (18) einzuschalten/auszuschalten, wobei sich die Ventile mit unabhängiger Betätigung in Beziehung zueinander für eine unabhängige Kombination der Zustände Öffnung/Schließung befinden.

2. Ventil nach Anspruch 1, **dadurch gekennzeichnet, dass** das geradlinige Verschlusselement (43) des Ein-/Ausschalt-Bypassventils einen Stab (44) umfasst, der an einem Ende mit einem Verschlusselement (46) versehen ist, das geeignet ist, mit dem Sitz (34') des inneren Kanals (34) der Bypassleitug (18) in Kontakt zu kommen, um den Durchlass des Fluids in der Bypassleitug selbst zu öffnen/schließen, und der mit den funktionalen Mitteln zur Manipulation versehen ist, die einen Knopf (50) umfassen, der auf dem Stab (44) an dem Ende, das dem Ende, das das Verschlusselement (46) umfasst, gegenüberliegt, eingepasst und befestigt ist und geeignet ist, um das Verschlusselement (46) in eine axiale Richtung zu bewegen.

3. Ventil nach Anspruch 1 oder 2, **dadurch gekennzeichnet, dass** das Ein-/Ausschalt-Bypassventil in einem Sitz innerhalb der Rückführungsleitung (16) untergebracht ist.

4. Ventil nach Anspruch 1 oder 2, **dadurch gekennzeichnet, dass** das Ein-/Ausschalt-Bypassventil in einem Sitz innerhalb der Zuführungsleitung (14) untergebracht ist.

5. Ventil nach einem oder mehreren der vorhergehenden Ansprüche, **dadurch gekennzeichnet, dass** das Ein-/Ausschalt-Bypassventil in seinem Sitz mittels funktionaler Mittel einer Abdichtung nach außen in Richtung der äußeren Umgebung befestigt ist, die eine Kappe (38) umfassen, die mit einer oder mehreren Dichtungen (40) und mit einer zentralen Durchgangsbohrung (42), die koaxial mit dem inneren Kanal (34) und geeignet für die Unterbringung des Stabes (44) des geradlinigen Verschlusselements (43) ist, versehen ist, wobei das Verschlusselement (43) mit Dichtungen (39) versehen ist, die geeignet sind, um eine Abdichtung in Bezug auf die Kappe (38) zu gewährleisten, und mit wahlweisen Dichtungen (48) versehen ist, um die Abdichtung in Bezug auf den Sitz (34') des inneren Kanals (34) der Bypassleitug (18) zu bilden.

6. Ventil nach Anspruch 5, **dadurch gekennzeichnet, dass** es ein Indikatorelement des Öffnens/Schließens der Bypassleitug (18) umfasst, das durch einen farbigen Ring (41) definiert ist, der außen an der Kappe (38) und koaxial zu dieser angeordnet und durch den Knopf (50) in der vollständig geschlossenen Konfiguration der Bypassleitug verborgen ist.

7. Ventil nach Anspruch 6, **dadurch gekennzeichnet, dass** das Indikatorelement des Öffnens/Schließens der Bypassleitug (18) durch eine abgestufte Skala definiert ist, die auf dem Knopf (50) angeordnet ist.

8. Ventil nach Anspruch 6, **dadurch gekennzeichnet, dass** das Indikatorelement des Öffnens/Schließens der Bypassleitug (18) durch eine abgestufte Skala definiert ist, die einteilig mit dem Ventilkörper (12) ist.

9. Ventil nach Anspruch 6, **dadurch gekennzeichnet, dass** die Verbindung des Ein-/Ausschalt-Bypassventils in Bezug auf den Ventilkörper (12) von dem Typ einer abnehmbaren, austauschbaren Verbindung ist, wobei die Kappe (38) mit dem Ventilkörper mittels eines Gewindes verbunden ist.

10. Ventil nach einem der vorhergehenden Ansprüche, **dadurch gekennzeichnet, dass** das Ein-/Ausschalt-Zuflussventil ein Verschlusselement vom Typ eines kugelförmigen Verschlusselements (20) umfasst, das in einem Sitz (14c) der Zuführungsleitung (14) untergebracht ist und in Drehung mittels eines Hebels (25) betätigt wird, und dass das Ein-/Ausschalt-Rückschlagventil ein Verschlusselement vom Typ eines kugelförmigen Verschlusselements (26) umfasst, das in einem Sitz (16c) der Rückführungsleitung (16) untergebracht ist und in Drehung mittels eines Hebels (30) betätigt wird, wobei jedes der kugelförmigen Verschlusselemente (20, 26) mit Abdichtungselementen, die durch mindestens ein Paar von gegenüberliegenden Abdichtungsringen (24, 32) definiert sind, versehen ist und in den Sitzen (14c, 16c) jeweils mittels einer Muffe (19), die mit einem Auslass (14b) der Zuführungsleitung (14) verbunden ist, bzw. mittels einer Muffe (21), die mit einem Einlass (16b) der Rückführungsleitung (16) verbunden ist, gehalten wird.

## Revendications

1. Soupape de dérivation améliorée (10) notamment appropriée pour le raccord d'unités terminales où se produit un échange thermique entre l'environnement à conditionner et un fluide caloporteur, en particulier un liquide, avec les lignes de distribution ou d'alimentation et de retour dudit fluide, ces unités étant typiquement définies par des échangeurs thermiques, des ventilo-convecteurs, des batteries pour les unités de traitement de l'air du type AHU (unité de traitement de l'air) dans le domaine des CVC (chauffage, ventilation et climatisation), comprenant un corps de soupape en forme de H (12) avec deux éléments tubulaires opposés et parallèles définissant un conduit de distribution (14) et un conduit de retour (16) joints l'un à l'autre et communiquant au moyen d'un élément transversal définissant un conduit de dérivation (18), intégrant, dans une structure monobloc, une soupape de distribution tout ou rien, une soupape de retour tout ou rien et une soupape de dérivation tout ou rien, ladite dernière comprenant au moins un moyen fonctionnel de manoeuvre et d'étanchéité vis-à-vis de l'environnement extérieur placé dans le conduit de retour (16) ou dans le conduit de distribution (14) et **caractérisé en ce qu'**elle est dotée d'un obturateur linéaire (43) de la soupape de dérivation tout ou rien qui est approprié pour venir en contact avec un siège (34') d'un canal interne (34) du conduit de dérivation (18) pour activer/désactiver la circulation du fluide caloporteur dans ledit conduit de dérivation (18), lesdites soupapes étant actionnables indépendamment les unes des autres pour une combinaison indépendante des états d'ouverture/de fermeture.

2. Soupape selon la revendication 1, **caractérisée en ce que** l'obturateur linéaire (43) de la soupape de dérivation tout ou rien comprend une tige (44) dotée au niveau d'une extrémité d'un obturateur (46) approprié pour venir en contact avec ledit siège (34') du canal interne (34) du conduit de dérivation (18) pour ouvrir/fermer le passage de fluide dans le conduit de dérivation lui-même et le moyen fonctionnel de manoeuvre comprenant un bouton (50) ajusté et fixé sur la tige (44) au niveau de l'extrémité opposée à celle comprenant l'obturateur (46) et approprié pour déplacer ledit obturateur (46) dans une direction axiale.

3. Soupape selon la revendication 1 ou 2, **caractérisée en ce que** la soupape de dérivation tout ou rien est logée dans un siège à l'intérieur du canal de retour (16).

4. Soupape selon la revendication 1 ou 2, **caractérisée en ce que** la soupape de dérivation tout ou rien est logée dans un siège à l'intérieur du conduit de distribution (14).

5. Soupape selon l'une quelconque des revendications précédentes ou plus, **caractérisée en ce que** la soupape de dérivation tout ou rien est fixée dans son siège par l'intermédiaire d'un moyen fonctionnel d'étanchéité vis-à-vis de l'environnement extérieur comprenant un capuchon (38) doté d'un ou plusieurs joints d'étanchéité (40) et avec un trou traversant central (42) coaxial avec le canal interne (34) et approprié pour loger la tige (44) de l'obturateur linéaire (43), ledit obturateur étant doté de joints (39) appropriés pour assurer une étanchéité relativement au capuchon (38) et avec des joints facultatifs (48) pour former l'étanchéité relativement au siège (34') du canal interne (34) du conduit de dérivation (18).

6. Soupape selon la revendication 5, **caractérisée en ce qu'**elle comprend un élément indicateur de l'ouverture/fermeture du conduit de dérivation (18) défini par un anneau coloré (41), placé à l'extérieur du capuchon (38) et coaxialement à celui-ci et caché par le bouton (50) dans la configuration totalement fermée dudit conduit de dérivation.

7. Soupape selon la revendication 6, **caractérisée en ce que** l'élément indicateur de l'ouverture/fermeture du conduit de dérivation (18) est défini par une échelle graduée placée sur le bouton (50).

8. Soupape selon la revendication 6, **caractérisée en ce que** l'élément indicateur de l'ouverture/fermeture du conduit de dérivation (18) est défini par une échelle graduée formant partie intégrante du corps de soupape (12).

9. Soupape selon la revendication 6, **caractérisée en ce que** le raccord de la soupape de dérivation tout ou rien relativement au corps de soupape (12) est du type amovible avec le capuchon (38) raccordé au dit corps de soupape au moyen d'un filetage.

10. Soupape selon l'une quelconque des revendications précédentes, **caractérisée en ce que** la soupape de distribution tout ou rien comprend un obturateur de type à bille (20) logé dans un siège (14c) du conduit de distribution (14) et actionné en rotation au moyen d'un levier (25) et **en ce que** la soupape de retour tout ou rien comprend un obturateur de type à bille (26) logé dans un siège (16c) du conduit de retour (16) et actionné en rotation au moyen d'un levier (30) chacun desdits obturateurs de type à bille (20, 26) étant doté d'éléments d'étanchéité définis par au moins une paire d'anneaux d'étanchéité opposés (24, 32) et maintenus dans les sièges (14c, 16c), respectivement, au moyen d'un manchon (19) raccordé à un orifice de sortie (14b) du conduit de distribution (14) et d'un manchon (21) raccordé à un orifice d'entrée (16b) du conduit de retour (16).
